# EUROPEAN PATENT APPLICATION

(11) **EP 2 866 181 A1**
(43) Date of publication of application: **29.04.2015**
(21) Application number: 14154029.4
(22) Date of filing: 05.02.2014
(51) Int. Cl.: G06Q 20/42

(54) **Mobile-enabled commerce service aggregation**

(30) Priority: 28.10.2013 US 201314065000
(71) Applicant: U.S. Bank National Association, Minneapolis, MN 55402 (US)
(72) Inventor: Hardison, Derrick, Atlanta, GA 30328 (US); Smith, Colin, Atlanta, GA 30328 (US); Mlynarski, Wally, Atlanta, GA 30328 (US)
(74) Representative: Lawrence, John

(57) **Abstract**

Mobile payment systems (100) and methods (300; 400; 500; 600; 700; 800; 900) allow a customer to make payments at a point-of-sale device using their mobile device. In the mobile payment method, a single bundle of transaction information is received at an aggregator server (202; 1006) from a mobile device (206; 1002) and the server creates a bundle ID for the received bundle. The bundle ID is sent to the mobile device (206; 1002), which presents it to the POS device (208). The POS (208) device sends the received bundle ID back to the aggregator server (202; 1006) and, if the bundle ID matches the expected ID, then payment processing is initiated according to preferences outlined in the transaction information.

## Description

### BACKGROUND

Retail consumers have a variety of payment options offered to them both at physical points-of-sale and in virtual checkout environments. For example, it is common for a consumer to be offered the option of paying with check, cash, credit cards, debit cards, and stored value cards. Consumers also have a variety of choices for discounts, coupons, and rebates, both at physical retailers and online stores. In addition to the tender options offered to physical-store consumers, some online retailers allow a consumer to pay with stored value accounts, wire transfers, digital currency, loyalty points, and third-party payment processing accounts.

Payment with such digital accounts and currencies can make payments easier and faster for online consumers. In contrast, customers at physical stores have fewer options for paying so easily, and usually have to carry physical tender and cards around to the stores and pay with only the few options accepted by physical point-of-sale devices.

### SUMMARY OF THE DISCLOSURE

The following disclosure relates to systems and methods for using a mobile device to make payments at a retail location. Although specifically suited for physical retail locations, some aspects of the embodiments described below may also be applicable to enhancing online retail transactions.

In one embodiment, an example method involves a processor receiving a single bundle of transaction information from a mobile device. The transaction information is associated with a payment transaction and includes indications of a selected payment tender. The method also involves the processor generating a unique bundle ID for the received bundle and transmitting the unique bundle ID to the mobile device. The method also involves receiving signals from a point-of-sale system (POS) that include the unique bundle ID. Further, the method involves transmitting payment authorization information associated with the transaction bundle to the POS system.

In another embodiment, an example system includes a computer storage medium, a computer interface, and a processor. The computer interface is configured to communicate with a mobile device and a POS system. The processor is configured to receive a single bundle of transaction information from the mobile device, where the transaction information is associated with a payment transaction and includes indications of a selected payment tender. In response to receiving the information, the processor is configured to generate a unique bundle ID for the received bundle and transmit the unique bundle ID back to the mobile device. Additionally, the processor is also configured to receive signals that include the unique bundle ID from the POS system. The processor is further configured to transmit payment authorization information for the selected payment tender to the POS device.

In a further embodiment, an example computer-readable medium contains program instructions that, when executed, cause a processor to perform various functions. The functions involve receiving a transaction information indicative of a payment tender. The functions also involve transmitting the received transaction information in a single bundle to an aggregator server. The functions also involve receiving a unique bundle ID from the aggregator server, where the bundle ID is for the transmitted single bundle. The functions further involve presenting the received unique bundle ID in a format that is readable by a POS device.

The foregoing is a summary and thus by necessity contains simplifications, generalizations and omissions of detail. Consequently, those skilled in the art will appreciate that the summary is illustrative only and is not intended to be in any way limiting. Other aspects, inventive features, and advantages of the devices and/or processes described herein, as defined by the claims, will become apparent in the detailed description set forth herein and taken in conjunction with the accompanying drawings.

### BRIEF DESCRIPTION OF THE FIGURES

FIG. 1 is a schematic diagram of an example system for performing functions according to an exemplary embodiment;
FIG. 2 is a schematic diagram of an example communication network;
FIG. 3 is a flowchart showing process steps according to an exemplary embodiment;
FIG. 4 is a flowchart showing process steps according to an exemplary embodiment;
FIG. 5 is a flowchart showing process steps according to an exemplary embodiment;
FIG. 6 is a flowchart showing process steps according to an exemplary embodiment;
FIG. 7 is a flowchart showing process steps according to an exemplary embodiment;
FIG. 8 is a flowchart showing process steps according to an exemplary embodiment;
FIG. 9 is a flowchart showing process steps according to an exemplary embodiment; and
FIG. 10 is a data-flow diagram showing communication steps in an example transaction.

### DETAILED DESCRIPTION

Referring generally to the figures, systems and methods are described herein for processing payments in which a mobile device is used in the payment process.

The following disclosure is divided into two main sections. The first section discusses the devices and systems that can be used in an example embodiment. The second section discusses the techniques and methods involved in an example embodiment. Although the section on example methods references elements from the example system section, this is not intended to imply that the example systems and methods must be used together. Rather, the example methods may be carried out using any suitable system or combination of systems and the described example systems may carry out procedures other than those outlined in the example methods.

### 1. Example System Architecture

Functions and procedures described herein may be executed according to any of several embodiments. For example, procedures may be performed by specialized equipment that is designed to perform the particular functions. As another example, the functions may be performed by general-use equipment that executes commands related to the procedures. As still another example, each function may be performed by a different piece of equipment with one piece of equipment serving as control or with a separate control device. As a further example, procedures may be specified as program instructions on a computer-readable medium.

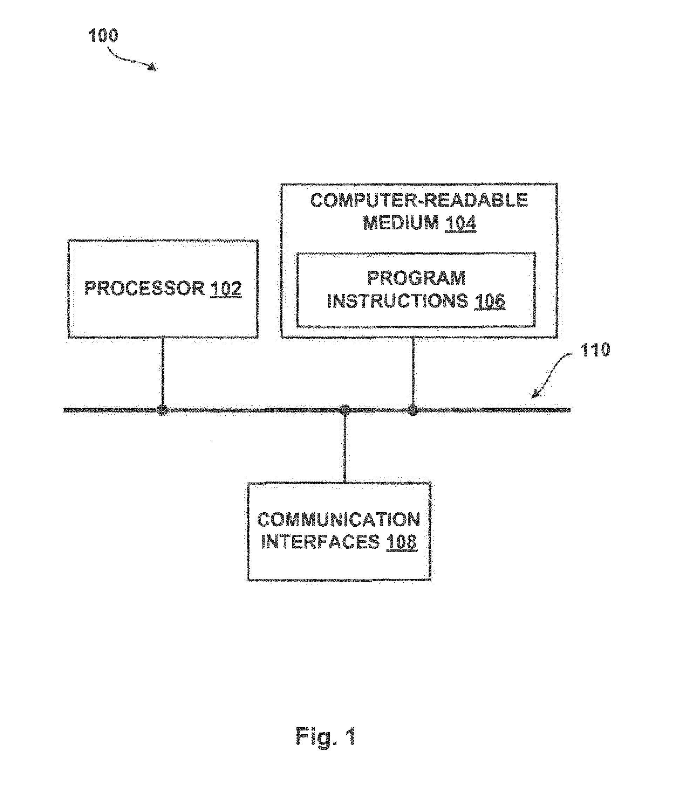

One example system (100) is shown in Figure 1. As shown, system 100 includes processor 102, computer-readable medium (CRM) 104, and communication interfaces 108, all connected through system bus 110. Also as shown, program instructions 106 are stored on computer-readable medium 104.

Processor 102 may include any processor type capable of executing program instructions 106 in order to perform the functions described herein. For example, processor 102 may be any general-purpose processor, specialized processing unit, or device containing processing elements. In some cases, multiple processing units may be connected and utilized in combination to perform the various functions of processor 102.

CRM 104 may be any available media that can be accessed by processor 102 and any other processing elements in system 100. By way of example, CRM 104 may include RAM, ROM, EPROM, EEPROM, CD-ROM or other optical disk storage, magnetic disk storage or other magnetic storage devices, or any other medium that can be used to carry or store desired program code in the form of program instructions or data structures, and which can be executed by a processor. When information is transferred or provided over a network or another communications connection (either hardwired, wireless, or a combination of hardwired or wireless) to a machine, the machine properly views the connection as a CRM. Thus, any such connection to a computing device or processor is properly termed a CRM. Combinations of the above are also included within the scope of computer-readable media.

Program instructions 106 may include, for example, executable code and data capable of causing a processing unit, a general-purpose computer, a special-purpose computer, special-purpose processing machines, or server system to perform a certain function or group of functions.

Communication interfaces 108 may include, for example, wireless chipsets, antennas, wired ports, signal converters, communication protocols, and other hardware and software for interfacing with external systems. For example, system 100 may receive study data via communication interfaces 108 from remote data sources (e.g., remote servers, internet locations, intranet locations, wireless data networks, etc.) or from local media sources (e.g., external drives, memory cards, specialized input systems, wired port connections, wireless terminals, etc.). As another example, system 100 may receive user-input and user-commands via communication interfaces 108 such as, for instance, wireless/remote control signals, touch-screen input, actuation of buttons/switches, voice input, and other user-interface elements. Communication interfaces may also be used to output resulting data.

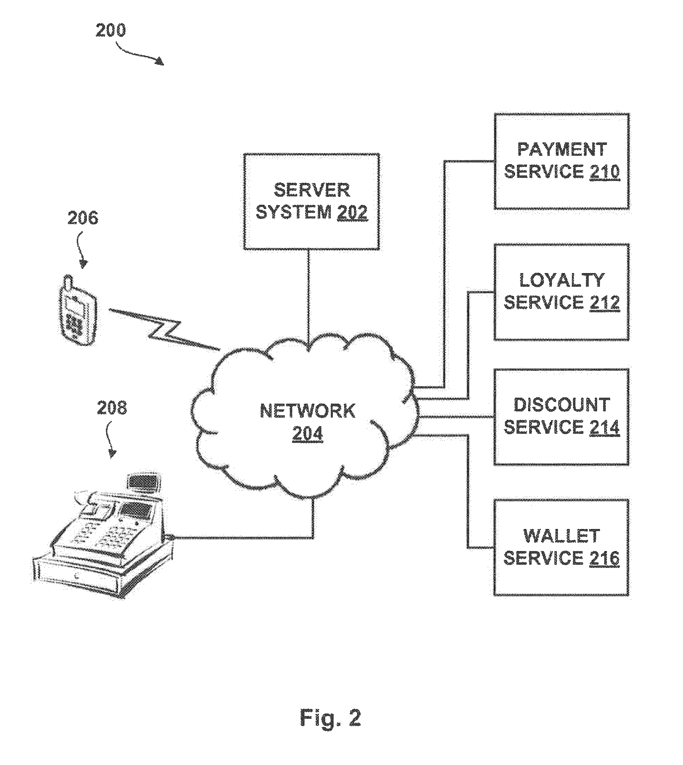

Fig. 2 illustrates an example communication network 200 in which system 100 may communicate in order to fulfill the functions outlined in this disclosure. As shown, server system 202, which may be implemented by systems such as system 100, communicates over network 204 with various devices. As shown, server system 202 may communicate with mobile device 206, point-of-sale (POS) device 208, payment service 210, loyalty service 212, discount service 214, and wallet service 216.

Network 204 may include any variety of connections, cables, links, air interfaces, switches, base stations, gateways, servers, location registers, network controllers, etc. and communications on network 204 may utilize any of various protocols, coding languages, signal types, security/privacy features, encoding processes. Although network 204 is shown as a single entity, this network may be functionally subdivided into various subnetworks according to region, signal types, features, uses, virtual private networks, and network owners. The connections between server system 202 and the various other devices may utilize the same connections or completely different systems. Examples of networks and subnetworks may include the Internet, local-area networks, the public switched telephone network (PSTN), the public switched data network (PSTN), cable/satellite telecommunication network, and the wireless cell network, among other examples. For any of the connections between server system 202 and other devices in the network 200, particular protocols may be implemented to effect the necessary communication. Such protocols may be stored in network 204, server system 202, or in the particular device/system with which server system 202 is attempting to communicate.

Mobile device 206 may be any type of device that communicates on network 204 with server system 202 and is associated with one or more customers. Although Fig. 2 shows a cellular telephone as an example of a mobile device 206, this is not meant to limit the disclosed embodiments to use with mobile telephone devices. Other example mobile devices may include smart phones, PDAs, internet-enabled MP3 players, laptops, desktops, tablets, wearable computing devices, e-readers, or any other currently available or forthcoming technology for communicating over a communication network with a server such as server system 202. Also, the term "mobile" should not be necessarily seen as limiting mobile device 206 to communication devices which are easily portable. In some embodiments mobile devices may be those which are easily portable. However, in other embodiments, a mobile device may be any computing device that can be moved from one place to another, allowing essentially any computing device to be used in place of mobile device 206. Additionally, although mobile device 206 is shown connecting to network 204 via an air interface, in other embodiments mobile device 206 may connect with network 204 over a wired, cable, or other connection.

POS device 208 may be any physical or virtual purchasing terminal. For example, POS device 208 may be a physical cash register, an online checkout environment, or any other device that communicates with an aggregator, acquirer, or other payment processing systems to effect payment of a transaction amount. As will be shown, POS device 208 should also be capable of receiving signals indicative of a bundle ID from mobile device 206. Such signaling may require POS device 208 to include virtual forms, physical interface elements (e.g, buttons, switches, knobs), near-field communication interfaces, equipment for scanning an optical code, wireless signal receivers (e.g., wifi, Bluetooth, IEEE 802.11 receivers), equipment for receiving audio signals, equipment for receiving optical signals, vibration signal sensors, private network connections for secure information transfer, etc.

Payment service 210, loyalty service 212, discount service 214, and wallet service 216 may include any currently available or forthcoming device and system architectures. In some cases, multiple services may be housed in a single system. Additionally, server system 202 may communicate with more than one service provider in each of the types of service. For example, transactions that use different payment types may require server system 202 to communicate with different payment server systems. In some cases, server system 202 may communicate with services, such as services 210-216 via direct connections or particular interfaces, rather than connecting with them over a broader network such as network 204. In other cases, server system 202 may include servers, devices, and/or databases that constitute services 210-216, directly at its location.

An example system or network architecture may also include a variety of devices or elements other than those shown in Fig. 1. For example, system 100 may include visual displays or audio output devices to present results of an example process. As another example, CRM 104 may store computer applications for specific data-generation or data-processing functions. Other examples are possible.

### II. Example Methods

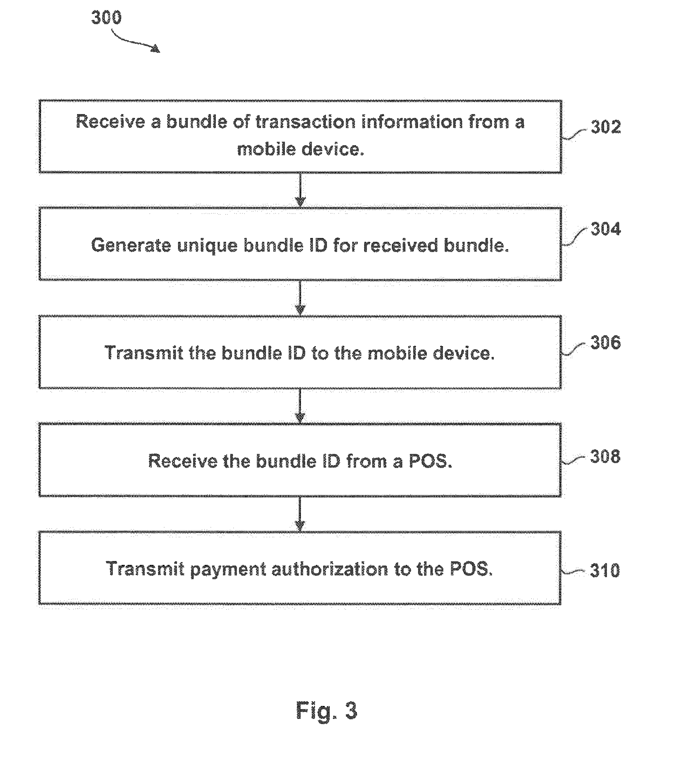

Fig. 3 is a flowchart illustrating a method 300 according to an exemplary embodiment, which may be performed by system 100 or other example systems. Method 300 may include additional, fewer, or different operations or steps than those shown, depending on the particular embodiment. As shown, method 300 involves receiving a bundle of transaction information from a mobile device (step 302). Method 300 also involves generating a unique bundle ID for the received bundle (step 304). Method 300 also involves transmitting the bundle ID to the mobile device (step 306). Method 300 also involves receiving the bundle ID from a point-of-sale device (step 308). Method 300 also involves transmitting payment authorization to the point-of-sale device (step 310).

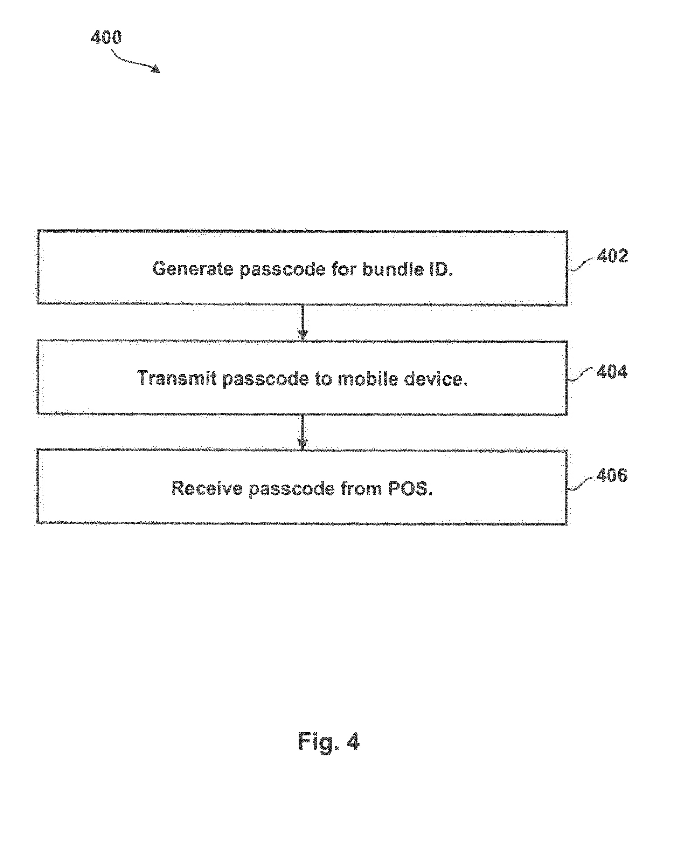

Fig. 4 is a flowchart illustrating a method 400, which may be used alone or in combination with the other illustrated methods. As shown, method 400 involves generating a passcode associated with the bundle ID (step 402). Method 400 also involves transmitting the passcode to the mobile device (step 404). Method 400 also involves receiving the passcode from the point-of-sale device (step 406).

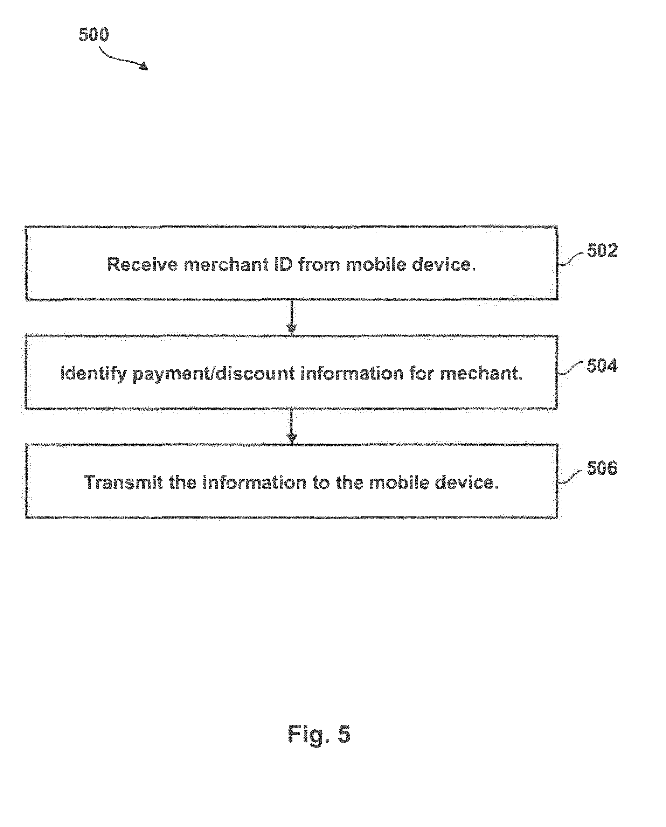

Fig. 5 is a flowchart illustrating another method 500, which may be used alone or in combination with the other illustrated methods. As shown, method 500 involves receiving identification of a merchant from the mobile device (step 502). Method 500 also involves identifying payment, discount, and/or loyalty information associated with the identified merchant (step 504). Method 500 also involves transmitting the identified payment/discount/loyalty information to the mobile device (step 506).

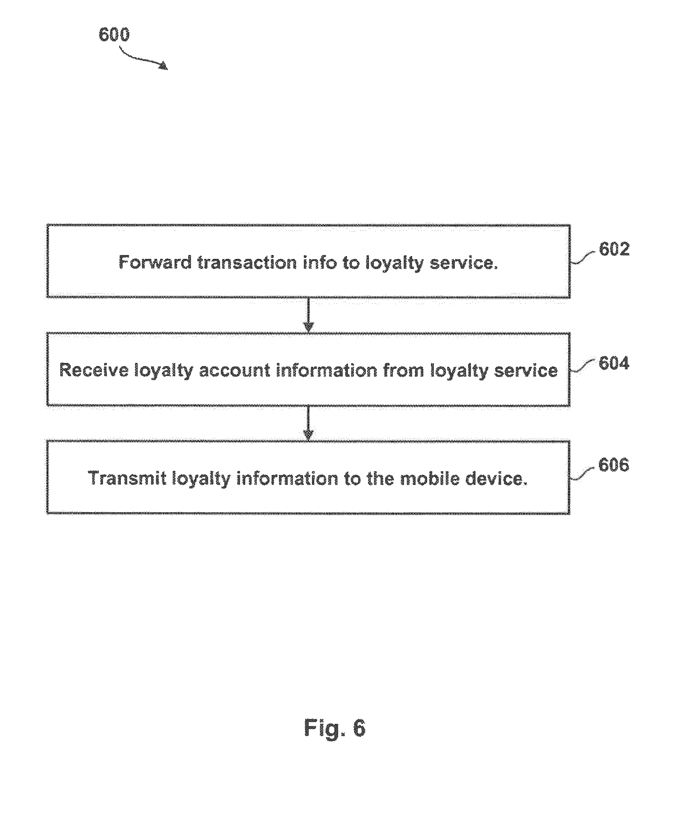

Fig. 6 is a flowchart illustrating another method 600, which may be used alone or in combination with the other illustrated methods. As shown, method 600 involves forwarding at least a portion of the transaction information to a loyalty service (step 602). Method 600 also involves receiving loyalty account information from the loyalty service (step 604). Method 600 also involves transmitting the received loyalty account information to the mobile device (step 606).

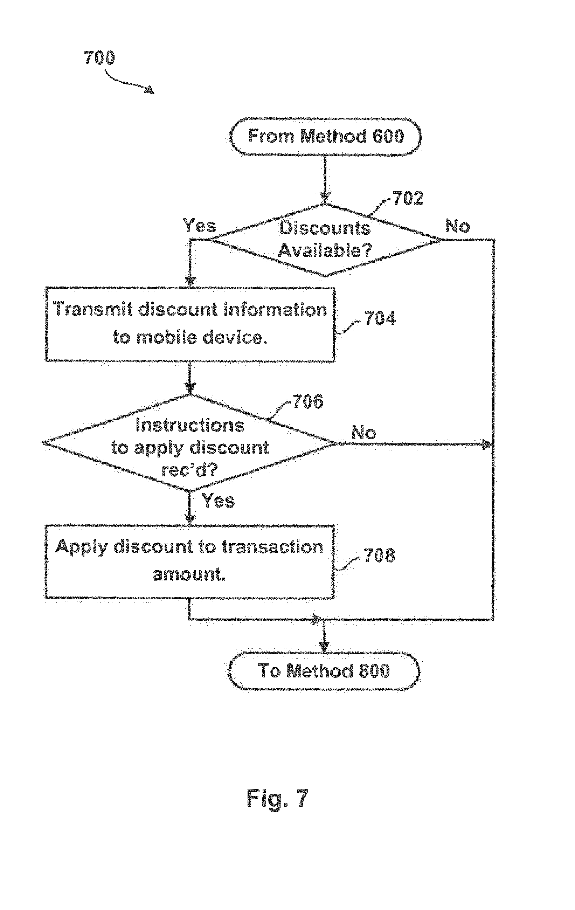

Fig. 7 is a flowchart illustrating another method 700, which may be used in combination with methods 600 and 800. As shown, method 700 may begin with method 600. This beginning does not imply that method 700 chronologically or logistically follows method 600. Method 700 may be performed before during or after the performance of method 600. Involves determining, based on the received loyalty account information, whether discounts associated with the loyalty program are available (step 702). Method 700 also involves, in response to determining the discounts are available, transmitting information regarding the discounts to the mobile device (step 704). Method 700 also involves determining whether instructions to apply the loyalty discount have been received from the mobile device (step 706) and, if such instructions have been received, applying the discount to a transaction amount (step 708). The discounted transaction amount may be used in method 800, as shown illustratively by the continuation to method 800. However, the steps of method 800 need not occur entirely after those of method 700. Rather, method 800 may be performed before during or after method 700.

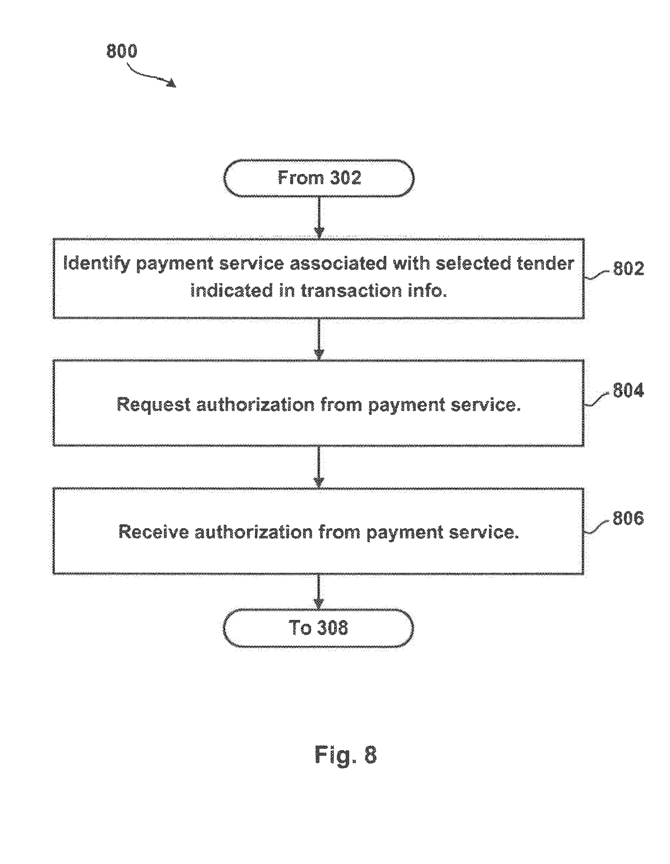

Fig. 8 is a flowchart illustrating a method 800, which may be used alone or in combination with the other illustrated methods. As shown, method 800 may occur between steps 302 and 308 of method 300. Aside from logical restrictions such as having received the selected tender in order to use the tender in an authorization process, the placement or method 800 between steps 302 and 308 should not imply the necessity of performing the steps in the order shown. As shown, method 800 involves identifying a payment service associated with the selected tender indicated in the transaction information (step 802). Method 800 also involves requesting authorization for payment from the payment service (step 804). Method 800 also involves receiving payment authorization from the payment service (step 806).

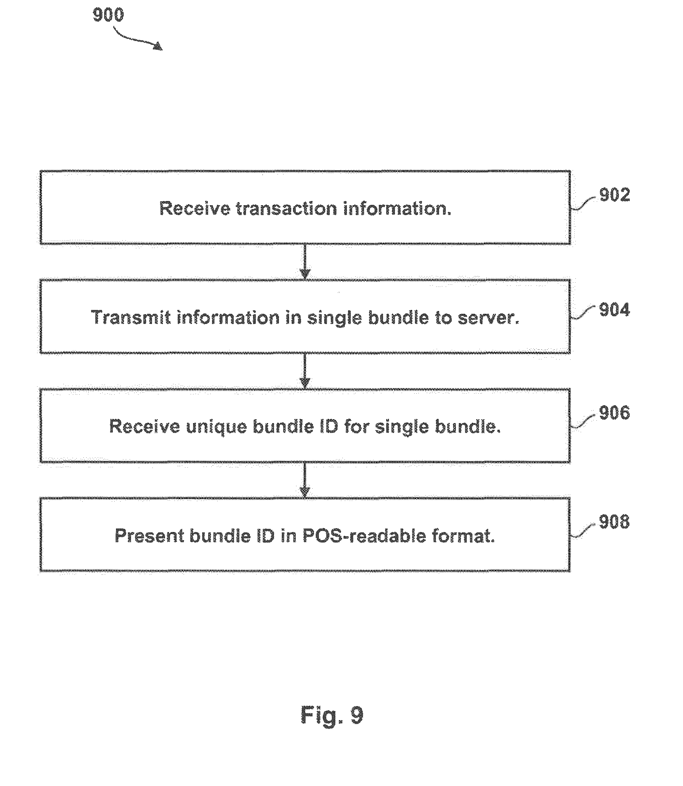

Fig. 9 is a flowchart illustrating a method 900, which may be used alone or in combination with other illustrated methods. As shown, method 900 involves receiving transaction information (step 902). Method 900 also involves transmitting the transaction information in a single bundle to an aggregator server (step 904). Method 900 also involves receiving, from the aggregator, a unique bundle ID for the single bundle of transaction information (step 906). Method 900 also involves presenting the bundle ID in a format that is readable by a POS device (step 908).

Although Figs. 3-9 show particular example arrangements or steps, these arrangements are only examples. Method steps may be ordered in other ways and individual steps may be combined with other steps or omitted without departing from the intended examples. Example methods may also include additional techniques and steps not shown in Figs. 3-9.

As shown in method 500, a consumer may utilize the mobile device to request merchant information from the server system. Transmitting the merchant ID to the server system may involve, for instance, the mobile device accessing a location service to "check-in" at a merchant location, the mobile device sensing and merchant ID from its surrounding environment (e.g., via a near field communication, scanning an optical code, a wireless signal (e.g., WiFi or Bluetooth), an audio signal, an optical signal, or image recognition of particular features of merchant location), or receiving an indication of the merchant from user-input.

Once a server has received the merchant ID, it may search for payment, discounts, coupon, available payment options, loyalty programs, and other information associated with the merchant. In some cases, the server may maintain databases of available discounts, payment options, coupons, and loyalty programs for a set of merchants. In such a case, the server may simply search the database for the particular merchant ID indicated by the mobile device and, if the merchant is found, send information to the mobile device. In other cases, the server may search external databases, network locations, and transaction history in order to determine transaction information associated with the merchant.

Then, the server may transmit collected merchant transaction information to the mobile device. Mobile device may then interpret this information in order to present various options associated with a request to transaction. For example, the mobile device may receive payment options associated with the merchant and the, responsively, display a list of possible payment types for selection by the user. As another example, the mobile device may receive coupon data associated with digital and physical coupons that may be used at the merchant location and, responsively, present the optional coupons for review and selection via a user-interface. As another example, the mobile device may receive information related to loyalty programs (e.g., merchant-specific, brand-specific, payment tender programs, GetOne, Belly, etc.) available for transaction that the particular merchant. In some cases, the server or mobile device may filter out loyalty programs in which the customer is not registered. In other cases, the new optional loyalty program may be shown on the user interface to allow a user to connect with their loyalty programs.

As shown in step 302 method 300, an exemplary processor implemented method may involve receiving a bundle of transaction information from a mobile device. The transaction bundle may be received at a server system, such as server system 202 of Fig. 2, from a mobile device, such as mobile device 206 of Fig. 2. The received signal may be indicative of the transaction information in any of various ways. For example, if the transaction bundle is an IP packet, or set of IP packets, then the transaction information may be contained in the payload of the packet(s). As another example, if the packet is encoded signal, then the signal may be indicative of a message that must be decrypted before being analyzed for transaction information.

In an exemplary embodiment, the transaction information may all be received in a single bundle. For example, a single bundle may be a single packet of information, such as an IP packet, or it may be a group of packets associated together in a single informational entity. As another example, a server may treat any set of packets from a single source (e.g., a transport layer port, and IP network address, a phone number, or device for the particular device ID) as a single bundle. As yet another example, the server may treat a set of information that is received in a certain timeframe as a single bundle. Further still, a server could treat a set of information of a predefined size as a single bundle. Systematically, the protocol for defining a single bundle of information may be stored on a mobile device in order that the mobile device may communicate all transaction information in one single bundle.

In some cases, the server may store profile information regarding certain devices or accounts. In such a case, received transaction information may be associated with the profile information. For instance, if a server receives a bundle of transaction information from a device that is associated with a "User Account A", then the server may digitally associate the transaction information with profile information related to User Account A. Such profile information may include personal information (e.g., name, shipping address, contact information), demographic information (e.g., age, nationality, gender, occupation), payment information (e.g., account numbers, card numbers, loyalty accounts, billing addresses, stored-value account balance), purchase history information, preferences, and device information, among other information types.

The bundle transaction information may include a selected payment tender for a transaction. For example, available payment tenders may include check, cash, credit cards, debit cards, stored value cards, other stored value accounts, wire transfers, digital currency, loyalty points, and third-party payment processing accounts, among any other existing or future forms of payment. In some cases, the transaction information may indicate security information, such as PIN numbers, usernames, or passwords associated with a payment account. In other cases, the server system may store such information as is necessary for payment processing in profile information associated with a customer, device, or account. In still other cases, the server may store preference information that indicates that particular selected tender associated with certain purchase types or merchants. In such a case, the user may not need to particularly specify the payment tender because other transaction information may be sufficient for the server system to associate a previously selected tender with the transaction.

In some cases, the transaction information may be indicative of more than one selected payment tender. For example, a customer it may indicate a stored value account be used for a portion of the payment and a credit card be used for the remainder of the payment. Such a split transaction may include any number of selected tenders and may specify rules for applying each of the selected tenders. For example, transaction information may indicate (i) that a particular credit card should always be up until some specified amount, (ii) that a second credit card should be used up until a second specified amount, and (iii) that a mobile wallet service be used for portions of the payment above the second specified amount. In some cases, the server may automatically determine preset limits. For example, the server may determine the remaining balance on a stored value card or account and set a payment limits on that card. According to the determined in a balance.

The single bundle of transaction information may also include discount, coupon, and loyalty program information related to the transaction. In order to determine appropriate discounts, coupons, and loyalty programs for use with the transaction, the mobile device or other connected server may search for programs, coupons, and discounts available for the merchant as discussed above with respect to method 500. In other cases, the transaction bundle may instruct the server to apply all coupons, discounts, and programs available for the transaction. In such an embodiment, the transaction information may specify particular types of coupons, discounts, and loyalty programs that the consumer does not wish to apply the transaction. In an exemplary embodiment, all of the discount, coupon, and loyalty program may be sent in the single bundle of information.

Single bundle of transaction information may include all the necessary payment, discount, and loyalty information for any transaction with the particular merchant, the transaction bundle may be sent before a transaction has begun, without the server having received any information regarding the transaction prior to receiving the single bundle. Therefore, the single bundle of transaction information may be the first communication that the server has regarding particular transaction. Further, because the transaction information in the single bundle includes all the necessary information to complete the transaction, the server system can affect the transaction and payment without needing to receive any additional signaling from the mobile device. In some cases, the mobile device may still send other information to the server, such as a confirmation that the payment amount should be processed, although such signaling is not necessary for the server to complete the transaction.

In response to receiving the single bundle of transaction information, the server may generate a unique bundle ID associated with the transaction bundle. For example, the bundle ID may be a random assortment of characters, numbers, symbols that are uniquely defined for the transaction. As another example, the bundle ID may be a chosen word or phrase to apply to the transaction. Many other examples of bundle IDs may be defined in keeping with the present embodiments.

As shown in the method 400, the server may also generate a passcode associated with the bundle and bundle ID. Like the bundle ID, the passcode may be unique to the transaction. In other cases, however, the passcode may be selected from a set of potential passcodes. For example, a particular passcode may be associated with a device, user profile, or payment account. In this way, the passcode is not directly sent to the consumer, but, rather, the passcode may be a memorized code that the customer always uses, like a PIN number. The inclusion of such a passcode may help to ensure that the unique bundle ID is used by the consumer associated with the bundle ID.

Upon receiving the unique bundle ID, the mobile device may display the bundle ID on a user-interface to facilitate user entry of the bundle ID into a POS device (e.g., by pressing buttons, telling a cashier the ID, or writing the number on a recognition screen). In other embodiments, the mobile device may convert the bundle ID into a form that is readable by the POS device itself. For example, the mobile device may display an optical code (e.g., a barcode, QR code, sequence of characters, numbers, and symbols, or a video watermark code) that the POS device may scan and recognize as the unique bundle ID. As another example, the mobile device may communicate the bundle ID through a near-field communication interface (e.g., an NFC tap or a passive RFID configuration) that communicatively couples with an interface on the POS device. As another example, a mobile device may vibrate in a pattern that, when detected by the POS, the POS recognizes as being indicative of the bundle ID. As another example, the mobile device may transmit the bundle ID via wireless signaling (e.g., WiFi, Bluetooth, etc.), an audio signal, an optical signal, a wired data connection, or any other data-transference technique presently known or forthcoming.

In addition to communicating the bundle ID to the POS device, a mobile device may also communicate other information related to the transaction. For example, loyalty or coupon information may be directly input to the POS device along with the unique bundle ID. In this way, processes that must be performed at the POS device (such as the scan of physical coupon codes), may be achieved. The POS device may also prompt for and receive the passcode if one is associated with the transaction bundle. Other operations associated with the transaction may be performed at the POS device, such as scanning purchases, applying on-site discounts, and indicating that mobile payment will be used. In some cases, indicating that a mobile payment will be used may invoke a communication process to begin to link the POS device to the server.

Once the POS device has received the bundle ID and optional passcode, the POS device transmits these pieces of information to the server system along with transaction information. The server system receives the transmitted bundle ID, passcode, and transaction information in preparation for completing the transaction. The transaction information for the POS device may include a transaction amount, information on the particular products/services purchased, discounts and coupons that have already been applied and any other payment that was performed at the POS device.

The server may check that the bundle ID and passcode are the same as those sent to the mobile device. In response to determining that the bundle ID/passcode matches, the server system may associate the transaction information received from the merchant with the transaction information received from the mobile device. The server may move on to processing the payment information once all the transaction information has been received.

The server uses the transaction information from the POS device, the transaction information from the mobile device, and any other received information (e.g., information from loyalty service 212) to determine the payment amount(s) that will be applied to each selected payment tender. As a particular example, the server system may start with the transaction amount from the merchant and apply all available discounts, coupons, and loyalty program accounts to the received transaction amount in order to determine the final cost to be paid by the customer. In some embodiments, discounts and coupons may be applied prior to determining the actual cost to be applied to the payment tender(s). If multiple payment tender types are being used for the transaction, the server may then divide the final cost among the selected payment tenders according to the rules defined by the mobile device or the server. Once the final cost is calculated, the server may send a confirmation request to the mobile device to confirm that the payment amount is acceptable and should be applied.

Before, during, or after the cost is divided between the payment tenders, the server system may determine a payment service or services associated with the selected tender(s). For example, if one payment option is a credit card, the server may find a network location associated with the issuer of the card or some aggregator that handles credit card payments for the issuer. As another example, if a user indicates that a mobile wallet will be used for a transaction, then the server may determine a payment service associated with the mobile wallet through a mobile-wallet interface.

When the final cost to be applied to each payment tender has been determined, and payment services associated with the tender(s) have been located, the server system may transmit payment authorization requests to the payment services. Such requests may include the amount to be applied, the particulars of the account upon which the payment will be drawn, and, in some cases, demographic/personal information. The amount requested for approval may be equal to the cost to be applied to the tender or it can be more than the final cost to allow for a cushion of available tender in case any payment particulars need to change.

If the customer has sufficient funds in their account(s) to cover the final cost, then the payment service, loyalty service, mobile wallet service, or other payment processor would transmit an authorization of the requested amount. The server system may forward the authorization to the POS device so that the POS device may complete the transactions. The approval may also be forwarded to the mobile device.

### III. Authentication Process Example Application

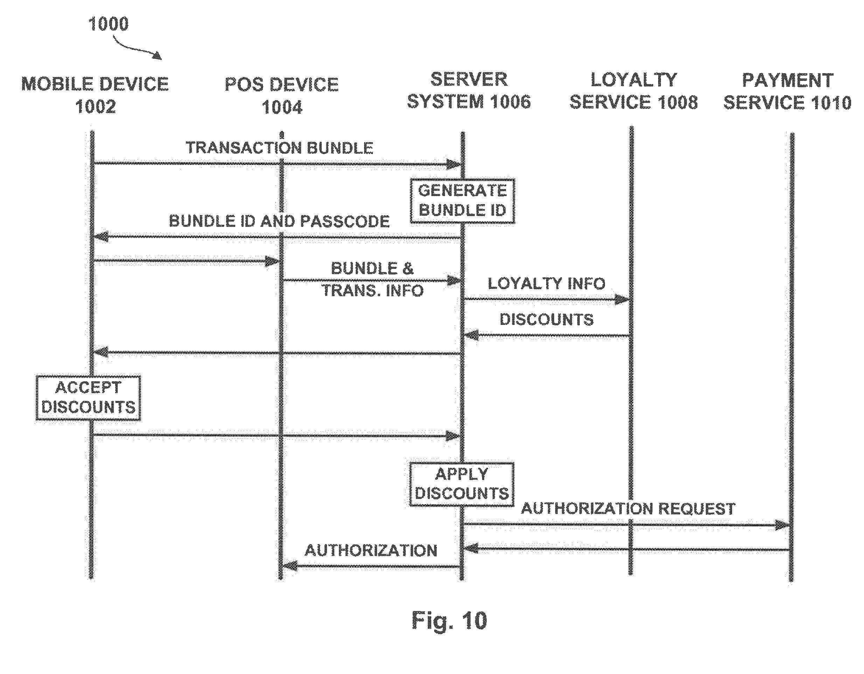

To further illustrate the process of an example embodiment, Fig. 10 illustrates an example data flow that may take place during one particular transaction example. This example is illustrative but not intended as limiting the invention to this singular set of steps and features.

In the example of Fig. 10, communication signals flow to/from a mobile device 1002, POS device 1004, server system 1006, loyalty service 1008, and payment service 1010. As shown, mobile device 1002, initiates the transaction process by sending the signal transaction bundle to server system 1006. Server system 1006 generates a bundle ID and passcode and sends the ID and passcode back to the mobile device, whereupon mobile device 1002 presents or otherwise allows access to the bundle ID for the POS device. The POS device sends the bundle ID, passcode, and transaction information back to the server device.

In the particular example of Fig. 10, the transaction information includes loyalty information, which server system 1006 sends to loyalty service 1008. In response to the loyalty information, loyalty service 1008 sends discount information, to server system 1006. Server system 1006, in turn, relays the discount information to mobile device 1002. Mobile device 1002 has the option of accepting or denying the offered discounts. If the discounts are accepted, then they are sent to service server 1006 to be applied to the received transaction information.

After the discounts are applied, an authorization request is sent to payment service 1010. Payment service 1010 may then determine whether the applied account has sufficient funds to complete the transaction. If the payment service determines that the selected payment tenders are sufficient for the transaction, then the service send authorization signaling to server system 1006, which, in turn, is configured to send the authorization information to the POS device.

### IV. Conclusion

The arrangement and design of the elements of the systems and methods as shown in the exemplary embodiments are illustrative only. Although only a few embodiments of the present disclosure have been described in detail, those skilled in the art who review this disclosure will readily appreciate that many modifications are possible without materially departing from the novel teachings and advantages of the subject matter recited.

Additionally, in the subject description, the word "exemplary" is used to mean serving as an example, instance or illustration. Any embodiment or design described herein as "exemplary" is not necessarily to be construed as preferred or advantageous over other embodiments or designs. Rather, use of the word exemplary is intended to present concepts in a concrete manner. Accordingly, all such modifications are intended to be included within the scope of the present disclosure. The order or sequence of any process or method steps may be varied or re-sequenced according to alternative embodiments. Any means-plus-function clause is intended to cover the structures described herein as performing the recited function and not only structural equivalents but also equivalent structures. Other substitutions, modifications, changes, and omissions may be made in the design, operating conditions, and arrangement of the preferred and other exemplary embodiments without departing from scope of the present disclosure or from the scope of the appended claims.

Although the figures show a specific order of method steps, the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

## Claims

1. A method comprising:
a processor receiving, from a mobile device, a single bundle of transaction information associated with a payment transaction, the transaction information comprising indicia of a selected payment tender;
in response to receiving the single bundle, the processor generating a unique bundle ID for the received bundle;
the processor transmitting the unique bundle ID to the mobile device;
the processor receiving, from a point-of-sale system, signaling indicative of the unique bundle ID; and
the processor transmitting payment authorization information associated with the transaction bundle to the point-of-sale system.

2. The method of claim 1, wherein the processor performs one or more of:
(i) generating a near-field communication (NFC) signal indicative of the received bundle ID; and
transmitting the generated NFC signal to a point-of-sale device;
(ii) generating a wireless communication signal indicative of the received bundle ID; and
transmitting the generated wireless communication signal to a point-of-sale device;
(iii) generating an audio signal indicative of the received bundle ID; and
presenting the generated audio signal to a point-of-sale device;
(iv) communicating the received bundle ID to a point-of-sale device through a vibration signal indicative of the bundle ID; and
(v) any combination of (i) to (iv).

3. The method of claim 1 or claim 2, further comprising:
the processor generating a passcode for the received single bundle;
the processor transmitting the passcode to the mobile device; and
the processor receiving, from a point-of-sale system, signaling indicative of the passcode.

4. The method of claim 1 or claim 2 or claim 3, wherein the processor receives the signaling indicative of the unique bundle ID prior to transmitting any information associated the payment transaction to the point-of-sale system.

5. The method of any previous claim, wherein transmitting the unique bundle ID to the mobile device comprises transmitting the bundle ID in a form that is readable by the point-of-sale-device, and/or
the method, further comprising:
the processor receiving, from the mobile device, an indication of a merchant;
the processor identifying discount information associated with the indicated merchant; and
the processor transmitting the located discount information to the mobile device.

6. The method of any previous claim, wherein the transaction information further comprises a selected loyalty program, the method further comprising:
in response to detecting the selected loyalty program in the transaction information, the processor automatically forwarding portions of the received transaction information to a loyalty server associated with the selected loyalty service;
the processor receiving, from the loyalty server, loyalty account information related to the transaction information; and
the processor transmitting the received loyalty account information to the mobile device.

7. The method of any previous claim, wherein the received signaling from the point-of-sale-device is further indicative of a transaction amount, the method further comprising:
the processor determining a payment service associated with the selected payment tender; and
the processor requesting, from the determined payment service, the payment authorization information for a payment amount based on the indicated transaction amount.

8. The method of claim 7, wherein the transaction information further comprises a selected coupon, wherein the processor automatically applies the selected coupon to the indicated transaction amount to determine the requested payment amount; and/or
the transaction information further comprises a selected discount, wherein the processor automatically applies the selected discount to the indicated transaction amount to determine the requested payment amount; and/or
the transaction information further comprises a selected loyalty program, the method further comprising:
in response to detecting the selected loyalty program in the transaction information, the processor automatically forwarding portions of the received transaction information to a loyalty server associated with the selected loyalty service;
the processor receiving, from the loyalty server, a loyalty program discount, wherein the processor automatically applies the loyalty program discount to the indicated transaction amount to determine the requested payment amount.

9. A system comprising:
a computer storage medium;
a communication interface configured to communicate at least with a mobile device and a point-of-sale system; and
a processor configured to perform functions comprising:
via the communication interface, receiving, from the mobile device, a single bundle of transaction information associated with a payment transaction, the transaction information comprising indicia of a selected payment tender;
in response to receiving the single bundle, generating a unique bundle ID for the received bundle;
transmitting the unique bundle ID to the mobile device via the communication interface;
via the communication interface, receiving, from the point-of-sale system, signaling indicative of the unique bundle ID; and
transmitting payment authorization information associated with the transaction bundle to the point-of-sale system via the communication interface.

10. The system of claim 9, further comprising the point-of-sale system, wherein the point-of-sale system is configured to receive signals indicative of the bundle ID from the mobile device.

11. The system of claim 9 or claim 10, wherein the transaction information further comprises a selected loyalty program, wherein the communication interface is configured to communicate with a loyalty server associated with the selected loyalty program, and wherein the functions further comprise:
in response to detecting the selected loyalty program in the transaction information, automatically forwarding portions of the received transaction information to the loyalty server;
receiving, from the loyalty server, loyalty account information related to the transaction information; and
transmitting the received loyalty account information to the mobile device.

12. The system of any one of claims 9 to 11, wherein the received signaling from the point-of-sale-system is further indicative of a transaction amount, wherein the communication interface is configured to communicate with at least one payment processing system, and wherein the functions further comprise:
selecting, from the at least one payment processing system, a payment processing system associated with the selected payment tender; and
requesting, from the selected payment processing system, the payment authorization information for a payment amount based on the indicated transaction amount, and optionally or preferably
wherein the transaction information further comprises a selected discount, and wherein the processor is configured to automatically apply the selected discount to the indicated transaction amount to determine the requested payment amount.

13. A non-transitory computer readable medium having stored thereon instructions executable to cause a mobile device to perform function comprising:
receiving transaction information indicative of a payment tender;
transmitting, to an aggregator server, the received transaction information in a single bundle;
receiving, from the aggregator server, a unique bundle ID for the transmitted single bundle; and
presenting the received unique bundle ID in a format that is interpretable by a point-of-sale device.

14. The computer-readable medium of claim 13, wherein the functions further comprise:
receiving, from the aggregator server, a passcode for the transmitted single bundle; and
presenting the received passcode separately from presenting the unique bundle ID; and/or
wherein the functions further comprise:
receiving an indication of a merchant;
identifying one of a coupon, a discount, or a loyalty program associated with the indicated merchant; and
presenting the identified coupon, discount, or loyalty program as an option for inclusion in the transmitted single bundle; and optionally or preferably
wherein the functions further comprise:
identifying a payment tender associated with the indicated merchant; and
presenting the identified payment tender as an option for the selected payment tender to be included in the transmitted single bundle.

15. The computer-readable medium of claim 13 or claim 14, wherein the instructions are further executable to cause the processor to perform one or more of:
(i) generate a near-field communication (NFC) signal indicative of the received bundle ID; and
transmit the generated NFC signal to a point-of-sale device;
(ii) generate a wireless communication signal indicative of the received bundle ID; and
transmit the generated wireless communication signal to a point-of-sale device;
(iii) generate an audio signal indicative of the received bundle ID; and
present the generated audio signal to a point-of-sale device;
(iv) communicate the received bundle ID to a point-of-sale device through a vibration signal indicative of the bundle ID; and
(v) any combination of (i) to (v).

16. The computer-readable medium of any one of claims 13 to 15, wherein the received transaction information is further indicative of one of a selected coupon, a selected discount, or a selected loyalty program.
